(19) Europäisches Patentamt
European Patent Office
Office européen des brevets

(11) **EP 4 691 993 A1**

(12) **EUROPEAN PATENT APPLICATION**
published in accordance with Art. 153(4) EPC

(43) Date of publication:
**11.02.2026  Bulletin 2026/07**

(21) Application number: **24780717.5**

(22) Date of filing: **28.03.2024**

(51) International Patent Classification (IPC):
**C01G 49/00** (2006.01)     **C04B 35/38** (2006.01)
**H01F 1/34** (2006.01)

(52) Cooperative Patent Classification (CPC):
**C01G 49/00; C04B 35/26; H01F 1/34**

(86) International application number:
**PCT/JP2024/012842**

(87) International publication number:
**WO 2024/204618 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023  JP 2023056889**

(71) Applicant: **Powdertech Co., Ltd.
Kashiwa-shi,
Chiba 277-8557 (JP)**

(72) Inventors:
• **AGA, Koji**
**Kashiwa-shi, Chiba 277-8557 (JP)**
• **YAMAMOTO, Ippei**
**Kashiwa-shi, Chiba 277-8557 (JP)**
• **KANEKO, Tatsuto**
**Kashiwa-shi, Chiba 277-8557 (JP)**
• **ONO, Asuka**
**Kashiwa-shi, Chiba 277-8557 (JP)**

(74) Representative: **Vossius & Partner
Patentanwälte Rechtsanwälte mbB
Siebertstrasse 3
81675 München (DE)**

(54) **FERRITE POWDER**

(57)     To provide a ferrite powder having excellent temporal stability of a magnetic permeability while maintaining a high filling property, and a high magnetic permeability and a low loss at a high frequency. The ferrite powder contains: 56.0 mass% or more and 63.0 mass% or less of iron (Fe); 7.0 mass% or more and 13.0 mass% or less of manganese (Mn); and 1.0 mass% or more and 3.0 mass% or less of zinc (Zn).

*FIG. 1*

EP 4 691 993 A1

**Description**

TECHNICAL FIELD

The present invention relates to a ferrite powder.

BACKGROUND ART

A composite material containing a ferrite powder and a resin is widely used in various applications including an inductor. Such a composite material is prepared by kneading the ferrite powder and the resin. The composite material is molded into a shape such as a sheet to form a composite body (molded body). At this time, when the shape of particles constituting the ferrite powder is close to a spherical shape, fluidity during the molding is improved, and a filling rate of the ferrite powder in the composite body is increased. Therefore, moldability is improved, and magnetic properties are improved. From such a viewpoint, a ferrite powder (particles) containing spherical or polyhedral particles has been proposed.

For example, Patent Literature 1 discloses a Mn-Zn-based ferrite powder containing at least spherical or polyhedral ferrite particles having a spinel phase as a main phase, in which the ferrite particles have a step structure having a convex polygonal contour on a surface, the ferrite powder has a BET specific surface area of $0.35 \text{ m}^2/\text{g}$ or more and $10.00 \text{ m}^2/\text{g}$ or less, and a content of a zinc oxide (ZnO) phase is 0 mass% or more and 0.8 mass% or less (claim 1 in Patent Literature 1). In addition, Patent Literature 1 discloses that regarding the ferrite powder, a magnetic loss can be prevented at a high frequency, and particle falling off can be prevented without impairing moldability and a filling property when the ferrite powder is applied to a composite material or a composite body ([0024] in Patent Literature 1).

PRIOR ART DOCUMENT

PATENT LITERATURE

Patent Literature 1: WO 2022/209640

SUMMARY OF INVENTION

OBJECT TO BE ACHIEVED BY THE INVENTION

As described above, it has been conventionally proposed to improve the moldability and the filling property of the composite material or the composite body by using a spherical or polyhedral ferrite powder. However, as a result of examination by the present inventors, it has been found that, when a conventional ferrite powder is composited with a resin and further heat-molded to prepare a resin molded body (composite body), there is a problem that a phenomenon (disaccommodation) that a magnetic permeability of the resin molded body gradually decreases with the time occurs.

As a result of further studies by the present inventors, it has been found that the temporal change of the magnetic permeability is greatly influenced by $\gamma\text{-Fe}_2\text{O}_3$ having a vacant lattice among ferromagnetic iron (Fe) oxides contained in ferrite. Then, it has been found that, by preventing generation of $\gamma\text{-Fe}_2\text{O}_3$ and controlling a lattice vacancy ratio, a ferrite powder having excellent temporal stability of a magnetic permeability can be obtained while maintaining a high filling property, and a high magnetic permeability and a low loss at a high frequency.

Therefore, an object of the present invention is to provide a ferrite powder having excellent temporal stability of a magnetic permeability while maintaining a high filling property, and a high magnetic permeability and a low loss at a high frequency.

MEANS FOR ACHIEVING THE OBJECT

The present invention encompasses the following aspects (1) to (4). Note that, in the present description, the expression "to" includes numerical values at both ends thereof. That is, "X to Y" has the same meaning as "X or more and Y or less".

(1) A ferrite powder containing 56.0 mass% or more and 63.0 mass% or less of iron (Fe); 7.0 mass% or more and 13.0 mass% or less of manganese (Mn); and 1.0 mass% or more and 3.0 mass% or less of zinc (Zn).

(2) The ferrite powder according to the above (1), in which the ferrite powder contains spheroidal ferrite particles containing a spinel phase as a main component, the spinel phase has an amount of iron (Fe) being excessive than a stoichiometric ratio and a lattice vacancy ratio of 0 mol% or more and 90 mol% or less, and the ferrite powder has a shape factor SF-1 of 100 or more and 110 or less and a volume average particle diameter (D50) of 2.0 $\mu$m or more and 20 $\mu$m or less.

(3) The ferrite powder according to the above (1) or (2), in which a content of $\alpha$-iron oxide ($\alpha$-Fe$_2$O$_3$) is 0.0 mass% or more and 3.0 mass% or less.

(4) The ferrite powder according to any one of the above (1) to (3), in which a content of copper (Cu) is 0.0 mass% or more and 0.5 mass% or less.

EFFECTS OF INVENTION

According to the present invention, it is possible to provide a ferrite powder having excellent temporal stability of a magnetic permeability while maintaining a high filling property, and a high magnetic permeability and a low loss at a high frequency.

BRIEF DESCRIPTION OF DRAWINGS

FIG. 1 shows a temporal change of a magnetic permeability real part ($\mu$') of a ferrite powder (Example 1).
FIG. 2 shows a temporal change of a magnetic permeability real part ($\mu$') of a ferrite powder (Example 5).

EMBODIMENTS FOR CARRYING OUT THE INVENTION

A specific embodiment of the present invention (hereinafter referred to as "the present embodiment") will be described. Note that, the present invention is not limited to the following embodiment, and various modifications can be made without departing from the gist of the present invention.

<<1. Ferrite Powder>>

A ferrite powder according to the present embodiment contains: 56.0 mass% or more and 63.0 mass% or less of iron (Fe); 7.0 mass% or more and 13.0 mass% or less of manganese (Mn); and 1.0 mass% or more and 3.0 mass% or less of zinc (Zn).

The ferrite powder (hereinafter sometimes simply referred to as a "powder") is composed of a plurality of ferrite particles (hereinafter sometimes simply referred to as "particles"). That is, the ferrite powder is an aggregate of a plurality of ferrite particles. The ferrite particles constituting the ferrite powder are basically independent. Therefore, the ferrite powder alone exhibits fluidity as a whole. However, as long as the ferrite powder exhibits fluidity as a whole, the ferrite powder in which several particles contained therein are bonded to form aggregated particles (secondary particles) is not excluded.

The ferrite powder (particles) according to the present embodiment has a spinel phase as a main phase. That is, a content ratio of the spinel phase is 50.0 mass% or more. The spinel phase is an iron oxide-based compound having a basic composition represented by MFe$_2$O$_4$ (where M is a metal element such as a transition metal element or a vacancy), and most of them are ferromagnetic materials. Therefore, the ferrite powder having the spinel phase as the main phase exhibits excellent magnetic properties.

The ferrite powder according to the present embodiment has a composition of Mn-Zn-based ferrite containing iron (Fe), manganese (Mn), and zinc (Zn). The Mn-Zn-based ferrite generally has a high magnetic permeability. Therefore, in the case where the ferrite powder is applied to a device such as an inductor, excellent magnetic properties can be obtained.

The amount of iron (Fe) in the ferrite powder is 56.0 mass% or more and 63.0 mass% or less. When the amount of Fe is less than 56.0 mass%, the amount of Mn and/or the amount of Zn is relatively increased. In this case, depending on the composition ratio, a loss factor (tan $\delta$) tends to increase from a relatively low frequency near 50 MHz. Since the loss is large, it is unsuitable for use in high frequency applications such as an inductor. The amount of Fe is preferably 57 mass% or more, and more preferably 58 mass% or more. On the other hand, when the amount of Fe is more than 63.0 mass%, the amount of Mn and/or the amount of Zn is relatively reduced. A real part of a complex magnetic permeability (magnetic permeability real part: $\mu$') is low, and a high saturation magnetic flux density cannot be obtained. Therefore, it is also unsuitable for use in applications such as an inductor. The amount of Fe is preferably 62.5 mass% or less, and more preferably 62 mass% or less. The amount of Fe is preferably 57 mass% or more and 62.5 mass% or less, and more preferably 58 mass% or more and 62 mass% or less.

The amount of manganese (Mn) in the ferrite powder is 7.0 mass% or more and 13.0 mass% or less. When the amount of Mn is less than 7.0 mass%, the amount of Fe and/or the amount of Zn is relatively increased. In this case, the magnetic permeability real part ($\mu$') is reduced, and it is unsuitable for applications such as an inductor. The amount of Mn is preferably 7.3 mass% or more, and more preferably 7.5 mass% or more. On the other hand, when the amount of Mn is more than 13.0 mass%, the amount of Fe and/or the amount of Zn is relatively reduced. Depending on the composition ratio, the loss factor (tan $\delta$) tends to increase from a relatively low frequency near 50 MHz. Therefore, it is also unsuitable for use in high frequency applications such as an inductor. The amount of Mn is preferably 12 mass% or less, and more preferably 11% mass% or less. The amount of Mn is preferably 7.3 mass% or more and 12 mass% or less, and more preferably 7.5 mass% or more and 11 mass% or less.

The amount of zinc (Zn) in the ferrite powder is 1.0 mass% or more and 3.0 mass% or less. When the amount of Zn is less than 1.0 mass%, the effect of adding Zn is difficult to obtain, and the magnetic permeability real part ($\mu$') is reduced. On the other hand, when the amount of Zn is more than 3.0 mass%, the loss factor (tan $\delta$) at 50 MHz is increased. In addition, when the amount of Zn is excessively large, fine particulate zinc oxide (ZnO) may adhere to the surface of the ferrite particles constituting the ferrite powder. This is because a part of the excess Zn volatilizes in a high temperature heat treatment step (thermal spraying step or the like) during the production of the ferrite powder, and is reprecipitated as fine particulate ZnO on the surface of the ferrite particles. When ZnO adheres to the surface of the ferrite particles, a viscosity of a composition is rapidly increased when the ferrite powder and a resin are mixed and kneaded to prepare a composite material, which may make the preparation difficult.

The ferrite powder preferably contains 57 mass% or more and 62.5 mass% or less of iron (Fe), 7.3 mass% or more and 12 mass% or less of manganese (Mn), and 1.0 mass% or more and 3.0 mass% or less of zinc (Zn), and more preferably contains 58 mass% or more and 62 mass% or less of iron (Fe), 7.5 mass% or more and 11 mass% or less of manganese (Mn), and 1.0 mass% or more and 3.0 mass% or less of zinc (Zn).

Preferably, the ferrite powder contains spheroidal ferrite particles containing a spinel phase as a main component. Here, the spheroidal ferrite particles include not only spherical particles but also polyhedral particles. By controlling the shape of the particles contained in the ferrite powder to be spheroidal (spherical or polyhedral), moldability and a filling property of the ferrite powder can be made excellent. This is because the spheroidal particles can smoothly avoid contact with other particles during molding. Therefore, the fluidity during the molding is improved, and dense filling is possible. In contrast, particles having an irregular shape such as a plate shape or a needle shape are poor in moldability and filling property.

Some of the ferrite particles constituting the ferrite powder may be spheroidal ferrite particles, or all may be spheroidal ferrite particles. However, from the viewpoint of improving the moldability and the filling property, a ratio of the spheroidal ferrite particles is preferably high. Specifically, the ratio of the spheroidal ferrite particles is preferably 50% by number or more.

The polyhedral particles basically have a shape in which a plurality of polygons are three-dimensionally combined. The polygon constituting the polyhedron is typically a triangle, a quadrangle, a hexagon, an octagon, a decagon, or a combination thereof, reflecting a crystal structure of the ferrite particles. An example of such a polyhedron is an obliquely cut apex cubic octahedron composed of a combination of a quadrangle, a hexagon, and an octagon. The polyhedron is closer to a sphere as the number of faces increases. Therefore, the polyhedral particles have a shape of preferably 10 or more faces, more preferably 12 or more faces, and still more preferably 14 or more faces. In addition, the polyhedral particles have a shape of typically 100 or less faces, more typically have 72 or less faces, and still more typically have 24 or less faces.

Note that, particles in which one or a plurality of straight lines constituting a polygon are cut or particles in which a part of a straight line is a curved line are also included in the polyhedral particles as long as the particles can be recognized as a polyhedral shape when the entire particles are viewed. The polyhedral particles also include particles having fine jagged straight lines constituting a polygon. Further, spheroidal step particles may have a step structure on the surface thereof. In this case, strictly speaking, the shape may not be completely spherical or polyhedral. However, this step structure is much smaller in dimension than that of the particles. Therefore, even when particles have such a microscopic step structure, particles having a spherical or polyhedral shape when viewed macroscopically are regarded as spherical or polyhedral particles.

Preferably, the ferrite particles (spheroidal step particles) contained in the ferrite powder have a step structure on the surface thereof. By containing the particles having such a step structure, when the ferrite powder is applied to a composite material or a composite body, an adhesive force with a resin is improved, and particle falling off is prevented. Although the detailed mechanism is unknown, it is presumed that the presence of the step structure increases a surface area of the particles, that is, a contact area with the resin, and as a result, a chemical bonding force between the particles and the resin is increased. In addition, it is also presumed that the particles and the resin are fitted to each other at steps of the step structure, so that an anchor effect of the resin acts and a physical bonding force between the particles and the resin is increased.

The step structure has a convex polygonal contour on the surface of the ferrite particles. That is, when the particles are viewed from the surface, the step structure has a convex polygonal outer shape (contour). In other words, the step structure is provided so as to surround one region in surface of the particles by a combination of straight lines. By providing such a step structure, it is possible to more effectively prevent the particles from falling off. Here, the convex polygon is a polygon having any interior angle of 180°C or less. It can also be said that the shape is a polygon in which a line segment connecting any two points inside or at the boundary does not extend outside. That is, it is not a concave polygon (non-convex polygon) such as a star shape. The contour of the step structure is not limited as long as it has a convex polygonal shape. However, to reflect the crystal structure of ferrite, the contour is typically a triangle, a quadrangle, a hexagon, an octagon, or a decagon. In addition, the ferrite particles may have a plurality of step structures on the surface thereof. Accordingly, it is possible to more effectively prevent the particles from falling off.

Preferably, in the spinel phase contained in the ferrite powder, the amount of iron (Fe) is excessive than a stoichiometric composition. That is, the spinel phase has a composition in which an amount of an iron (Fe) is excessive than the stoichiometric composition. As described above, the spinel phase has a basic composition represented by $MFe_2O_4$ (where M is a metal element such as a transition metal element or a vacancy). Therefore, in the stoichiometric composition in which M is an element other than Fe, a molar ratio of the amount of Fe to a total amount of M and Fe contained in the spinel phase is 2/3. In the case where the ratio of the amount of Fe is larger than 2/3, Fe is incorporated into the M site, and the composition of the spinel phase is $(M, Fe)Fe_2O_4$. By making the amount of Fe contained in the spinel phase larger than the stoichiometric composition, the loss factor ($\tan \delta$) at a high frequency can be reduced, and as a result, a low loss of the ferrite powder is realized.

Preferably, the spinel phase has a lattice vacancy ratio of 0 mol% or more and 90 mol% or less. The lattice vacancy ratio is defined as a ratio of the number of moles of $\gamma$-$Fe_2O_3$ to a total number of moles of $Fe_3O_4$ (magnetite) and $\gamma$-$Fe_2O_3$ (maghemite) contained in the ferrite powder (spinel phase) (number of moles of $\gamma$-$Fe_2O_3$/(number of moles of $Fe_3O_4$ + number of moles of $\gamma$-$Fe_2O_3$). By reducing the lattice vacancy ratio, it is possible to reduce a temporal change of the magnetic permeability of the ferrite powder. In contrast, when the lattice vacancy ratio is more than 90 mol%, a temporal change of the magnetic permeability over a long period of time is increased. Therefore, in the case where the ferrite powder is used as a filler of a magnetic core for an inductor, a performance of the inductor changes over time. In this case, it is difficult to obtain an initially designed performance, which causes a malfunction of an electronic device.

To describe this point, as described above, the iron (Fe)-excess spinel phase has a composition of $(M, Fe)Fe_2O_4$. That is, a large amount of Fe is contained as an oxide in crystals of the spinel phase. The oxide of Fe has various forms such as $\alpha$-$Fe_2O_3$ (hematite), $\gamma$-$Fe_2O_3$ (maghemite), and $Fe_3O_4$ (magnetite). Among them, $\alpha$-$Fe_2O_3$ and FeO are antiferro-magnetic materials and do not exhibit ferromagnetic properties. In addition, these do not have a spinel structure.

In contrast, $Fe_3O_4$ (magnetite) and $\gamma$-$Fe_2O_3$ (maghemite) are ferromagnetic materials. The composition formula $Fe_3O_4$ can be rewritten as $Fe^{3+}(Fe^{2+}, Fe^{3+})_2O_4$, and the composition formula $\gamma$-$Fe_2O_3$ can be rewritten as $Fe^{3+}(Fe^{3+}_{5/6}V_{1/6})_2O_4$ (where V is a vacant lattice). Therefore, these have a spinel structure. Therefore, it can be said that the iron (Fe)-excess spinel phase includes one or both of $Fe_3O_4$ (magnetite) and $\gamma$-$Fe_2O_3$ (maghemite).

$Fe_3O_4$ (magnetite) having a spinel structure does not have a vacant lattice in the crystal structure, whereas $\gamma$-$Fe_2O_3$ (maghemite) has a vacant lattice (V) in the crystal structure. Therefore, the ferrite powder containing $\gamma$-$Fe_2O_3$ has a vacant lattice (V) in the spinel phase, and the number of vacant lattices increases as the amount of $\gamma$-$Fe_2O_3$ increases. The larger the number of the vacant lattices, that is, the larger the amount of $\gamma$-$Fe_2O_3$, the larger the temporal change of the magnetic permeability. The reason for this is thought to be related to interaction between the vacant lattice in a ferrite crystal lattice moving within the crystal lattice over time and settles into an energetically stable state (position), and the presence of the vacant lattice preventing the movement of domain walls.

Therefore, by reducing the amount of $\gamma$-$Fe_2O_3$ in the spinel phase, that is, the lattice vacancy ratio, the temporal change of the magnetic permeability can be reduced. From the viewpoint of reducing the temporal change of the magnetic permeability, it is desirable that the lattice vacancy ratio is small. The lattice vacancy ratio is more preferably 90 mol% or less, and still more preferably 85 mol% or less. On the other hand, by increasing the lattice vacancy ratio to some extent, the loss factor ($\tan \delta$) can be kept low. The lattice vacancy ratio is preferably 20 mol% or more, more preferably 30 mol% or more, and still more preferably 40 mol% or more. The lattice vacancy ratio is more preferably 20 mol% or more and 90 mol% or less, still more preferably 30 mol% or more and 90 mol% or less, and particularly preferably 40 mol% or more and 85 mol% or less.

As described above, the lattice vacancy ratio is the ratio of the number of moles of $\gamma$-$Fe_2O_3$ to the total number of moles of $Fe_3O_4$ and $\gamma$-$Fe_2O_3$. The Fe oxides exhibiting ferromagnetic properties are two kinds of spinel compounds, i.e., $Fe_3O_4$ and $\gamma$-$Fe_2O_3$, and it is thought that these two kinds of Fe oxides are present as nonstoichiometric compounds in the spinel. Therefore, the lattice vacancy ratio in the spinel can be estimated by using, as an index, the ratio of the vacancy lattice-containing Fe oxide ($\gamma$-$Fe_2O_3$) (lattice vacancy ratio) in the ferromagnetic Fe oxides ($Fe_3O_4$, $\gamma$-$Fe_2O_3$).

The lattice vacancy ratio is determined as follows. First, the ferrite powder is subjected to chemical analysis, and the amounts of Fe, Mn, Zn, and Cu in the powder are determined as mass percentages (mass%). Separately, the amount of divalent iron ($Fe^{2+}$) contained in the ferrite powder is determined by oxidation-reduction titration. Further, the ferrite powder is subjected to X-ray diffraction (XRD) analysis to determine the amount of $\alpha$-$Fe_2O_3$ (hematite) in the powder.

Next, using the atomic weight of Fe (55.85), the atomic weight of Mn (54.94), the atomic weight of Zn (65.39), the atomic weight of Cu (63.55), and the formula weight of $\alpha$-$Fe_2O_3$ (159.70), the amount of Fe (A), the amount of Mn (B), the amount of Zn (C), the amount of $Fe^{2+}$ (D), the amount of $\alpha$-$Fe_2O_3$ (E), and the amount of Cu (F) in terms of the number of moles are calculated according to the following equations (1) to (6). Then, the excess amount of Fe (G) (number of moles) and the amount of Fe compound having a vacant lattice ($\gamma$-Fe$_2$O$_3$) (H) (number of moles) are determined according to the following equations (7) and (8). Finally, the lattice vacancy ratio I (mol%) is calculated according to the following equation (9).

[Math. 1]

$$\text{Amount of Fe: A (number of moles)} = \frac{\text{Amount of Fe (mass\%)}}{55.85} \quad \cdots (1)$$

$$\text{Amount of Mn: B (number of moles)} = \frac{\text{Amount of Mn (mass\%)}}{54.94} \quad \cdots (2)$$

$$\text{Amount of Zn: C (number of moles)} = \frac{\text{Amount of Zn (mass\%)}}{65.39} \quad \cdots (3)$$

$$\text{Amount of Fe}^{2+}\text{: D (number of moles)} = \frac{\text{Amount of Fe}^{2+}\text{ (mass\%)}}{55.85} \quad \cdots (4)$$

$$\text{Amount of } \alpha\text{-Fe}_2\text{O}_3\text{: E (number of moles)} = \frac{\text{Amount of } \alpha\text{-Fe}_2\text{O}_3\text{ (mass\%)}}{159.70} \quad \cdots (5)$$

$$\text{Amount of Cu: F (number of moles)} = \frac{\text{Amount of Cu (mass\%)}}{63.55} \quad \cdots (6)$$

[Math. 2]

$$\text{Excess amount of Fe: G (number of moles)} = A - 2(B + C + E) - 5F \quad \cdots (7)$$

$$\text{Amount of } \gamma\text{-Fe}_2\text{O}_3\text{: H (number of moles)} = \frac{G - 3D}{2} \quad \cdots (8)$$

$$\text{Empty lattice ratio: I (mol\%)} = \frac{H}{D + H} \times 100 \quad \cdots (9)$$

Note that, the ferrite powder may contain $\alpha$-Fe$_2$O$_3$ (hematite). In addition, in the case where the ferrite powder contains copper (Cu), CuOFe$_5$O$_8$ (copper-iron composite oxide) may be formed. $\alpha$-Fe$_2$O$_3$ and CuOFe$_5$O$_8$ are not ferromagnetic materials having a spinel structure. Therefore, when the excess amount of Fe in the spinel phase is calculated according to the above equation (7), the amount of Fe contained in $\alpha$-Fe$_2$O$_3$ and CuOFe$_5$O$_8$ is excluded. In addition, while Fe$_3$O$_4$ (magnetite) contains divalent iron ions (Fe$^{2+}$), $\gamma$-Fe$_2$O$_3$ (maghemite) does not contain Fe$^{2+}$. Therefore, when the amount of $\gamma$-Fe$_2$O$_3$ is calculated according to the above equation (8), Fe$^{2+}$ contained in Fe$_3$O$_4$ is excluded.

Further, the excess amount of Fe determined according to the above equation (7) may be larger than zero (0). At this time, in the spinel phase contained in the ferrite powder, the amount of iron (Fe) is excessive than the stoichiometric composition.

Preferably, the excess iron (Fe) ratio in the ferrite powder is 25 mol% or more and 70 mol% or less. When the excess Fe ratio is less than 25 mol%, the magnetic permeability real part ($\mu'$) is increased, but the loss factor (tan $\delta$) is increased. Therefore, the ferrite powder is unsuitable for use as a filler of a magnetic core for an inductor. In addition, in the case where the excess Fe ratio is more than 70 mol%, the loss factor (tan $\delta$) is reduced but the magnetic permeability real

part (μ') is reduced. Therefore, the ferrite powder is really unsuitable for use as a filler of a magnetic core for an inductor. The excess Fe ratio is more preferably 35 mol% or more and 70 mol% or less, and still more preferably 40 mol% or more and 70 mol% or less. Note that, the excess Fe ratio is the ratio of the excess amount of Fe to the total amount of Fe, and is determined according to the following equation (10).

[Math. 3]

$$\text{Excess Fe ratio: J (mol\%)} = \frac{G}{A} \times 100 \quad \cdots \quad (10)$$

Preferably, a mass ratio (Fe/Mn mass ratio) of iron (Fe) to manganese (Mn) contained in the ferrite powder is 5.5 or more and 8.0 or less. When the amount of Zn is in the range of 1 mass% or more and 3 mass% or less and the Fe/Mn mass ratio is 5.5 or more and 8.0 or less, both a high magnetic permeability and a low loss of the ferrite powder can be achieved in a well-balanced manner. Therefore, the μ'Q product can be increased.

Preferably, a content of copper (Cu) in the ferrite powder is 0 mass% or more and 1.0 mass% or less. Cu tends to segregate in the ferrite particles. When the segregation occurs, the magnetic properties of the ferrite powder may deteriorate. By reducing the amount of Cu to 1.0 mass% or less, it is possible to prevent the occurrence of the segregation that causes deterioration of the magnetic properties. On the other hand, Cu has an effect of stabilizing the valence of Fe. Depending on a method for producing the ferrite powder, by appropriately adding Cu, it is possible to prevent generation of the vacant lattice, and it is possible to prevent the temporal change of the magnetic permeability over a long period of time. The content of Cu is more preferably 0 mass% or more and 0.50 mass% or less, and still more preferably 0 mass% or more and 0.35 mass% or less.

Note that, the ferrite powder may have a composition containing iron (Fe), manganese (Mn), zinc (Zn), copper (Cu), and oxygen (O), with the balance being unavoidable impurities. Alternatively, component elements other than Fe, Mn, Zn, Cu, and O may be contained. Examples of such component elements include lithium (Li), magnesium (Mg), aluminum (Al), titanium (Ti), chromium (Cr), cobalt (Co), and nickel (Ni). However, from the viewpoint of taking advantage of the excellent magnetic properties of the Mn-Zn-based ferrite, it is preferable not to contain a large amount of component elements other than Fe, Mn, Zn, Cu, and O. A content of the other component elements is preferably 10 mass% or less, more preferably 5 mass% or less, and still more preferably 1 mass% or less.

Preferably, the content ratio of the spinel phase in the ferrite powder (ferrite particles) is 80.0 mass% or more. The spinel phase, which is a ferromagnetic material, is a crystal phase as a main component exhibiting the magnetic properties of the ferrite powder. When the ratio of the spinel phase is increased, a saturation magnetization (σs) and a magnetic permeability (μ) of the ferrite powder can be increased. The ratio of the spinel phase is more preferably 85.0 mass% or more, still more preferably 90.0 mass% or more, particularly preferably 95.0 mass% or more, and most preferably 99.0 mass% or more. Note that, the ratio of the spinel phase is 100.0 mass% or less.

Preferably, a content of zinc oxide (ZnO) in the ferrite powder is 0.0 mass% or more and 1.0 mass% or less. Zinc oxide (ZnO) is a heterogeneous phase derived from zinc (Zn) that has not been ferritized. A ferrite powder containing a large amount of ZnO has low magnetic properties. In addition, this ferrite powder may cause a problem of increasing a viscosity of a resin composition when applied to a resin composition. Therefore, the smaller the content of ZnO, which is a heterogeneous phase, the more preferred. The content of Zn is more preferably 0.0 mass% or more and 0.8 mass% or less, and still more preferably 0.0 mass% or more and 0.5 mass% or less.

Preferably, a content of α-iron oxide (α-Fe$_2$O$_3$) in the ferrite powder is 0.0 mass% or more and 3.0 mass% or less. α-Fe$_2$O$_3$ is a heterogeneous phase that is an antiferromagnetic material. When the amount of α-Fe$_2$O$_3$ is excessively large, the magnetic properties of the ferrite powder decrease. When the amount of α-Fe$_2$O$_3$ is within the above range, the influence on the magnetic properties is small. Therefore, when the amount of α-Fe$_2$O$_3$ is within this range, it is possible to prevent a decrease in magnetic properties, particularly the saturation magnetization (σs), and to prevent a decrease in saturation magnetic flux density in the case where the ferrite powder is used in an inductor.

The particles constituting the ferrite powder may be composed of either a single crystal or a polycrystal. However, it is preferably composed of a polycrystal. The particles constituting the ferrite powder preferably has an average crystallite diameter of 150 nm or more and 220 nm or less.

Preferably, the ferrite powder has an volume average particle diameter (D50) of 2.0 μm or more and 20 μm or less. Here, the volume average particle diameter is a cumulative 50% diameter (D50) in a volume particle size distribution. When D50 is increased to 2.0 μm or more, the aggregation of the ferrite powder can be prevented, and the moldability and the filling property can be further improved. In addition, although depending on production conditions, the lattice vacancy ratio of the ferrite powder can be controlled by increasing the particle diameter to some extent. That is, ferrite particles having a small particle diameter have a large specific surface area. Therefore, oxidation easily proceeds in a high temperature heat treatment step such as thermal spraying during the production of the ferrite powder, and γ-Fe$_2$O$_3$ having a vacant lattice tends to be easily generated. D50 is more preferably 2.3 μm or more, still more preferably 2.5 μm or more,

particularly preferably 2.8 $\mu$m or more, and most preferably 3.0 $\mu$m or more, from the viewpoint of improving the moldability and the filling property and controlling the lattice vacancy ratio. On the other hand, when D50 is reduced to 20 $\mu$m or less, the generation of voids between particles can be prevented, and the filling property is more excellent. D50 is more preferably 12 $\mu$m or less, still more preferably 10 $\mu$m or less, particularly preferably 8.0 $\mu$m or less, and most preferably 7.0 $\mu$m or less, from the viewpoint of improving the filling property. D50 is more preferably 2.3 $\mu$m or more and 12 $\mu$m or less, still more preferably 2.5 $\mu$m or more and 10 $\mu$m or less, particularly preferably 2.8 $\mu$m or more and 8.0 $\mu$m or less, and most preferably 3.0 $\mu$m or more and 7.0 $\mu$m or less.

Preferably, the ferrite powder has a shape factor SF-1 of 100 or more and 110 or less. SF-1 is an index of sphericity of the particles constituting the powder. In the case of a perfect sphere, SF-1 is 100, and increases as being away from the sphere. When SF-1 is reduced to 110 or less, regardless of whether the particles are spherical or polyhedral, the fluidity of the powder is increased, and the moldability and the filling property are more excellent. SF-1 is more preferably 105 or less, and still more preferably 103 or less. SF-1 is more preferably 100 or more and 105 or less, and still more preferably 100 or more and 103 or less.

Preferably, the ferrite powder has a shape factor SF-2 of 100 or more and 110 or less. SF-2 is an index indicating a degree of unevenness of the surface of particles constituting the powder. When there is no surface unevenness, the SF-2 is 100, and increases as the unevenness is deeper. If the ferrite powder has a microscopic step structure on the surface of the particles, when the ferrite powder is formed into a composite material or a composite body, adhesion to the resin is improved, and the particles are prevented from falling off. Therefore, SF-2 is appropriately high, specifically, more preferably 101 or more. On the other hand, when SF-2 is excessively high, the fluidity of the powder decreases, which may lead to a decrease in moldability and filling property. SF-2 is more preferably 105 or less, and still more preferably 103 or less. SF-2 is more preferably 101 or more and 105 or less, and still more preferably 101 or more and 103 or less.

Preferably, the ferrite powder has a BET specific surface area of 0.2 m$^2$/g or more and 2.0 m$^2$/g or less. When the BET specific surface area is increased to 0.2 m$^2$/g or more, the generation of voids between particles is prevented, and the filling property can be further improved. In addition, when the BET specific surface area is within the above range, once the ferrite powder is applied to a composite material or a composite body, the adhesion to the resin is improved. The BET specific surface area is more preferably 0.3 m$^2$/g or more, from the viewpoint of improving the filling property and the adhesion. On the other hand, when the BET specific surface area is reduced to 2.0 m$^2$/g or less, the aggregation of the ferrite powder is prevented, which improves the moldability and the filling property. In addition, although depending on the production conditions, the lattice vacancy ratio of the ferrite powder can be controlled within a suitable range by reducing the BET specific surface area to some extent. The BET specific surface area is more preferably 1.5 m$^2$/g or less, and still more preferably 1.0 m$^2$/g or less, from the viewpoint of improving the moldability and the filling property and controlling the lattice vacancy ratio. The BET specific surface area is more preferably 0.2 m$^2$/g or more and 1.5 m$^2$/g or less, and still more preferably 0.3 m$^2$/g or more and 1.0 m$^2$/g or less.

Preferably, the ferrite powder has a tap density of 0.50 g/cm$^3$ or more and 3.50 g/cm$^3$ or less. The tap density can be increased by mixing particles having a small particle diameter and particles having a large particle diameter, and as a result, the filling property of the ferrite powder is more excellent as a whole. The tap density is more preferably 1.00 g/cm$^3$ or more and 3.00 g/cm$^3$ or less.

Preferably, the ferrite powder has a true specific gravity of 5.00 g/cm$^3$ or more. When the true specific gravity is increased, it is possible to improve the magnetic properties, particularly the saturation magnetization ($\sigma$s) and the magnetic permeability ($\mu$) of the ferrite powder. The true specific gravity is more preferably 5.05 g/cm$^3$ or more.

Preferably, the ferrite powder has a magnetic permeability real part ($\mu$') of 7.0 or more at 50 MHz. When $\mu$' is increased, the magnetic properties of a device such as an inductor containing the ferrite powder can be improved. $\mu$' is more preferably 7.5 or more, and still more preferably 8.0 or more.

Preferably, the ferrite powder has a $\mu$'Q product of 400 or more at 50 MHz. When the $\mu$'Q product is increased, it is possible to achieve both a high magnetic permeability and a low loss of the ferrite powder in a well-balanced manner. The $\mu$'Q product is more preferably 450 or more, and still more preferably 500 or more. Note that, the $\mu$'Q product is determined according to the following equation (11) using the real part ($\mu$') of the complex magnetic permeability of the ferrite powder and the loss factor (tan $\delta$). The loss factor (tan $\delta$) is determined according to the following equation (12) using the real part ($\mu$') and an imaginary part ($\mu$") of the complex magnetic permeability.

[Math. 4]

$$\mu' Q\ product = \frac{\mu'}{\tan \delta} \quad \cdots \quad (11)$$

$$\tan \delta = \frac{\mu''}{\mu'} \quad \cdots \quad (12)$$

Preferably, the ferrite powder has a magnetic permeability change rate of 0.040 or less at 50 MHz. The magnetic permeability change rate is an index of a degree of the temporal change of the magnetic permeability, and the smaller the magnetic permeability change rate, the smaller the temporal change of the magnetic permeability, that is, the more excellent the temporal stability. A change of the magnetic permeability over a long period of time is thought to be one of relaxation phenomena, and is approximated by power law. Therefore, the magnetic permeability $\mu'(t)$ after an elapsed time t (unit: hr) has an approximate linear relationship with a natural logarithm ln (t) at the time t as shown in the following equation (13). Note that, in the following equation (13), A represents a slope of a straight line, and B represents an intercept. An absolute value of the slope A of the straight line is determined as the magnetic permeability change rate as shown in the following equation (14).

[Math. 5]

$$\mu'(t) = A \cdot \ln(t) + B \quad \cdots \quad (13)$$

$$Magnetic\ permeability\ change\ rate = |A| \quad \cdots \quad (14)$$

When the magnetic permeability change rate is 0.040 or less, it can be determined that the temporal change of the magnetic permeability over a long period of time is small. In contrast, when the magnetic permeability change rate is more than 0.040, the performance of the inductor changes over time in the case where the ferrite powder is used as a filler of a magnetic core for the inductor. Accordingly, it is difficult to obtain an initially designed performance (output), which may cause a malfunction of an electronic device.

<<2. Method for Producing Ferrite Powder>>

A method producing for the ferrite powder according to the present embodiment is not limited as long as the above requirements are satisfied. However, as described below, it is preferably produced by thermally spraying a mixture of ferrite raw materials under predetermined conditions and then quenching the mixture.

<Mixing of Raw Materials>

First, ferrite raw materials are mixed to obtain a raw material mixture. As the ferrite raw material, known ferrite raw materials such as an oxide, a carbonate, a hydroxide and/or a chloride can be used. In addition, the mixing of the raw materials may be performed by using a known mixer such as a Henschel mixer, and either or both of a dry method and a wet method.

<Calcination and Pulverization>

Next, the obtained raw material mixture is calcined to obtain a calcined product. The calcination may be performed by using a known method. For example, a furnace such as a rotary kiln, a continuous furnace, or a batch furnace may be used under known conditions. For example, a condition of holding at a temperature of 700°C or higher and 1300°C or lower for 2 hours or longer and 12 hours or shorter in an atmosphere such as air is exemplified.

<Granulation>

Thereafter, the obtained calcined product is pulverized and granulated to obtain a granulated product. The pulverization method is not particularly limited. For example, using a known pulverizer such as a vibration mill, a ball mill, or a bead mill, either or both of a dry method and a wet method may be performed. The granulation method may also be a known method. For example, water and, if necessary, additives such as a binder such as a polyvinyl alcohol (PVA), a dispersant, and/or an antifoaming agent are added to the calcined product after the pulverization to adjust the viscosity, and then the granulation is performed using a granulator such as a spray dryer.

In the production of a common ferrite powder (particles), the binder component is generally removed before sintering. In contrast, in the production method according to the present embodiment, it is preferable not to perform the binder removal treatment. By performing the thermal spraying in a state of containing the binder component and controlling an amount of carbon contained in the granulated product, the lattice vacancy ratio of the finally obtained ferrite powder can be prepared within a suitable range.

Preferably, the amount of carbon contained in the granulated product is 0.08 mass% or more and 0.20 mass% or less. Depending on thermal spraying conditions, the lattice vacancy ratio of the ferrite powder can be controlled to a desired value by limiting the amount of carbon in the granulated product to the above range. In contrast, in the case where the amount of carbon is too small, an oxygen concentration in the surrounding environment of the particles passing through a flame is increased in the subsequent thermal spraying step. Therefore, since the oxidation of the ferrite powder proceeds, the generation of $\gamma\text{-}Fe_2O_3$ is promoted, which may lead to an increase in lattice vacancy ratio. On the other hand, in the case where the amount of carbon is too large, the decomposition of the binder component of the granulated product does not proceed sufficiently. Therefore, particles having an excessively large particle diameter and a non-uniform shape may be generated.

<Thermal Spraying>

Next, the obtained granulated product is thermally sprayed to obtain a thermally sprayed product. In the thermal spraying, the granulated product conveyed by a gas is melted and ferritized by passing through a thermal spraying flame. Thereafter, the ferritized particles are quenched and solidified using a cooling gas, and recovered with a cyclone or a filter. The cooling gas may be air at room temperature, or air or an inert gas (a nitrogen gas, a helium gas, an argon gas, or the like) at a temperature lower than room temperature may be used to prevent quenching and oxidation. If necessary, the recovered ferrite particles may be classified. In the classification, the particle diameter is adjusted to a desired particle diameter using a method such as existing air classification (airflow classification), mesh filtration, sieve classification, or sedimentation. It is also possible to separate and recover the large particle diameter particles in one step using airflow classification such as a cyclone.

In order to obtain ferrite particles having a step structure (spheroidal step particles), it is important to thermally spray the granulated product under predetermined conditions. The entire granulated product is melted during the thermal spraying and then quenched. Although the detailed mechanism is not clear, it is presumed that a polygonal step structure reflecting the crystal structure of ferrite is formed on the surface of the particles during high-temperature melting, and this structure is held by quenching. In contrast, in the case where the granulated product is sintered at a temperature equal to or lower than a melting temperature to form the ferrite particles, it is thought that a polygonal step structure is less likely to be formed, and even when the polygonal step structure is formed, the step structure disappears by annealing.

In the thermal spraying, a mixed gas of a combustion gas and oxygen can be used as a combustible gas combustion flame source. A volume ratio of the combustion gas to oxygen is preferably 1:3.5 to 1:6.0, more preferably 1:4.9 to 1:6.0, and still more preferably 1:4.9 to 1:5.3. Accordingly, the volatilized raw material is condensed, and the formation of particles having a small particle diameter can be suitably advanced. For example, a condition that a total oxygen flow rate is 35 $Nm^3$/hr (the volume ratio of the combustion gas to oxygen is 1:5) with respect to a combustion gas flow rate of 7 $Nm^3$/hr is exemplified.

In the case where the amount of the combustion gas or oxygen during the combustion is excessively large, the gas not used for the combustion may deprive the heat during the combustion and the temperature of the flame is lowered. The amount of the excess combustion gas not used for the combustion is preferably 20% or less of the amount of the supplied combustion gas. The amount of the excess oxygen not used for combustion is preferably 20% or less of the amount of the supplied oxygen.

The amount of the combustion gas with respect to a raw material supply amount is also important. Specifically, a net fuel gas amount ratio is preferably 1.05 $Nm^3$/kg or more and 2.00 $Nm^3$/kg or less. Here, a net gas amount ratio is a ratio of a net combustion gas amount to the raw material supply amount, and is determined according to the following equation (15). In addition, the net combustion gas amount is the amount of the combustion gas used for net combustion, and is determined according to the following equation (16) or (17).

[Math. 6]

$$\text{Net gas amount ratio} = \frac{\text{Net combustion gas amount (Nm}^3\text{/hr)}}{\text{Raw material supply amount (kg/hr)}} \quad \cdots (15)$$

[Math. 7]

$$\text{Net combustion gas amount} = \frac{\text{Amount of supplied combustion gas}}{5} \quad \cdots (16)$$

(Case where (amount of supplied combustion gas × 5 − amount of supplied oxygen) ≥ 0)

[Math. 8]

$$\text{Net combustion gas amount} = \text{Amount of supplied combustion gas} \quad \cdots (17)$$

(Case where (amount of supplied combustion gas × 5 − amount of supplied oxygen) < 0)

Examples of the combustion gas used for the thermal spraying include a combustible gas such as a propane gas, a propylene gas, and an acetylene gas, and among them, a propane gas is preferred. A carrier gas such as nitrogen, oxygen, or air can be used to carry the granulated product into the combustible gas. A flow rate of the conveyed granulated product is preferably 20 m/sec or more and 60 m/sec or less. A thermal spraying temperature is preferably 1000°C or higher and 3500°C or lower, and more preferably 2000°C or higher and 3500°C or lower.

The raw material supply amount during the thermal spraying is also important. That is, the mechanism of exhibiting the step structure changes depending on the time during which the raw material particles are cooled from the temperature when passing through the thermal spraying flame (the amount of heat applied to the raw material particles) to room temperature. In particular, the step structure is exhibited by quenching raw material primary particles that have passed through a high-temperature flame. Even when the flame is at the same temperature, the step structure is less likely to exhibit when the number of passing raw material primary particles per unit time (throughput per unit time) increases. The supply amount of a thermal spraying raw material is preferably small from the viewpoint of exhibiting the step structure. For example, the supply amount is preferably 20 kg/hr or less, more preferably 10 kg/hr or less, and most preferably 7 kg/hr or less.

When the ferrite powder contains an element having a high vapor pressure such as zinc (Zn), the step structure is effectively exhibited. However, not only the contained elements but also the conditions during the thermal spraying are important. That is, the thermally sprayed product that has passed through the thermal spraying flame is cooled from a high temperature at an appropriate rate, so that the step structure is easily exhibited. Unlike in the thermal spraying, a cooling rate is relatively slow in sintering. Therefore, with particle boundary growth of particles, an outer periphery of the step structure is not linear.

The cooling rate also has a large influence on the magnetic properties, particularly frequency properties of the magnetic permeability. That is, particles quenched during the thermal spraying have a relatively small grain size. Therefore, the loss factor (tan δ) is reduced at a frequency higher than 10 MHz. On the other hand, particles annealed during the sintering have a large grain size and thus have a large loss factor at a high frequency.

In this manner, by controlling the thermal spraying conditions, it is possible to adjust the properties of the ferrite powder. By performing the thermal spraying under preferred conditions, the shape of the obtained ferrite particles can be suitably adjusted. In addition, the lattice vacancy ratio of the ferrite particles can be controlled within a desired range.

<<3. Ferrite Resin Composite Material>>

A ferrite resin composite material according to the present embodiment contains the ferrite powder described above and a resin. According to this composite material, falling off of the ferrite particles is prevented without impairing the moldability and the filling property.

Examples of the resin constituting the composite material include an epoxy resin, a urethane resin, an acrylic resin, a silicone resin, a polyamide resin, a polyimide resin, a polyamideimide resin, a fluororesin, and a combination thereof. The silicone resin may be a modified silicone resin modified with acrylic, urethane, epoxy, and/or fluorine.

The composite material may contain components other than the ferrite powder and the resin. Examples of such components include a solvent, a filler (an organic filler and an inorganic filler), a plasticizer, an antioxidant, a dispersant, a colorant such as a pigment, and/or thermally conductive particles.

A ratio of the ferrite powder to a total solid content in the composite material is preferably 50 mass% or more and 95 mass% or less, and more preferably 80 mass% or more and 95 mass% or less. In addition, a ratio of the resin to the total solid content in the composite material is preferably 5 mass% or more and 50 mass% or less, and more preferably 5 mass% or more and 20 mass% or less. When the ratio of the ferrite powder or the resin is within the above range, dispersion stability of the ferrite powder in the composite material and storage stability and the moldability of the composite material are excellent, and properties such as mechanical strength and magnetic properties of a composite body (molded body) obtained by molding the composite material are more excellent.

<<4. Ferrite Resin Composite Body>>

A ferrite resin composite body according to the present embodiment contains a molded body of the ferrite resin composition described above. That is, the composite body is prepared by molding the ferrite resin composition. The molding method is not particularly limited, and examples thereof include compression molding, extrusion molding, injection molding, blow molding, and calendar molding. In addition, a coating film of the composite material may be formed on a substrate.

<<5. Electronic Component>>

An electronic component according to the present embodiment includes the ferrite resin composite body described above. The electronic component may be a known component that utilizes the magnetic properties of ferrite. Examples of such a component include an inductor such as a transformer and a communication coil. Since the electronic component according to the present embodiment contains a ferrite powder having a small temporal change of the magnetic permeability, it has a feature of excellent temporal stability.

EXAMPLES

The present embodiment will be described in more detail using the following Examples and Comparative Examples. However, the present invention is not limited to the following Examples.

(1) Preparation of Ferrite Powder

[Examples 1 to 10]

<Mixing of Raw Materials>

$\alpha$-Iron oxide ($\alpha$-$Fe_2O_3$), manganese tetraoxide ($Mn_3O_4$), zinc oxide (ZnO), and copper oxide (CuO) were used as raw materials, weighed, and mixed using a Henschel mixer. At this time, the raw materials were weighed such that the blending amounts of the raw materials in terms of $Fe_2O_3$, MnO, ZnO, and CuO were the molar amounts shown in Table 1 below.

<Calcination and Pulverization>

The obtained mixture was calcined using a rotary kiln. The calcination was performed by holding the mixture for 4 hours under the conditions (temperature and atmosphere) shown in Table 1 below. Next, the obtained calcined product was coarsely pulverized using a dry bead mill (3/16-inch steel ball beads). Thereafter, water was added, and the mixture was finely pulverized using a wet bead mill (0.65-mm zirconia beads), thereby obtaining a slurry. The particle diameter of the pulverized powder in the slurry is shown in Table 1 below.

<Granulation>

A polyvinyl alcohol (PVA, 10% aqueous solution) was added as a binder to the obtained slurry. At this time, the amount of PVA added was adjusted. The amount of PVA added to the pulverized powder in terms of solid content is shown in Table 1 below. Thereafter, the slurry to which the binder was added was granulated using a spray dryer.

<Thermal Spraying>

The obtained granulated product was thermally sprayed and quenched in a combustible gas combustion flame. The thermal spraying was performed under the conditions shown in Table 1 below (propane gas flow rate, total oxygen flow rate, raw material supply oxygen flow rate, combustion oxygen flow rate, raw material supply amount, air volume, and thermal spraying temperature). In addition, air for cooling was introduced into the combustion gas immediately after the thermal spraying to quench the product. Further, the product was recovered using a cyclone provided on a downstream side to obtain a thermally sprayed product. A coarse powder was removed from the obtained thermally sprayed product using a sieve, and a fine powder was further removed using a classification device to obtain a ferrite powder composed of Mn-Zn-based ferrite particles.

The production conditions of the ferrite powders in Examples 1 to 10 are summarized in Table 1 below. Note that, Examples 1 and 7 to 10 are example samples, and Examples 2 to 6 are comparative example samples.

[Table 1A]

Table 1 Condition for producing ferrite powder

| | Mixing of raw materials | | | | Calcination | | Pulverized particle diameter (primary particle) (μm) | Pulverization and granulation | | | |
|---|---|---|---|---|---|---|---|---|---|---|---|
| | Fe$_2$O$_3$ (mol) | MnO (mol) | ZnO (mol) | CuO (mass%) | Temperature (°C) | Atmosphere | | Amount (mass%) of binder added | Particle diameter (μm) of granulated product | Amount (mass%) of C in granulated product | PVA (per 25 kg of pulverized raw material) (g) |
| Example 1 | 68.84 | 24.50 | 6.66 | 0.00 | 900 | Air | 2.11 | 0.24 | 68.2 | 0.11 | 600 |
| Example 2* | 63.11 | 28.61 | 8.27 | 0.27 | 900 | Air | 2.11 | 0.24 | 65.4 | 0.12 | 600 |
| Example 3* | 50.40 | 38.54 | 11.07 | 0.14 | 900 | Air | 2.22 | 0.24 | 68.1 | 0.11 | 600 |
| Example 4* | 78.15 | 21.85 | 0.00 | 0.00 | 900 | Air | 1.98 | 0.06 | 55.4 | 0.05 | 150 |
| Example 5* | 68.40 | 26.70 | 6.90 | 0.00 | 900 | Air | 2.42 | 0.024 | 60.3 | 0.04 | 60 |
| Example 6* | 68.84 | 24.50 | 6.66 | 0.00 | 900 | Air | 2.11 | 0.72 | 69.1 | 0.21 | 1800 |
| Example 7 | 68.84 | 24.50 | 6.66 | 0.48 | 900 | Air | 2.11 | 0.12 | 65.9 | 0.06 | 300 |
| Example 8 | 68.84 | 24.50 | 6.66 | 0.27 | 900 | Air | 2.11 | 0.36 | 67.1 | 0.12 | 900 |
| Example 9 | 68.84 | 24.50 | 6.66 | 1.00 | 900 | Air | 2.11 | 0.24 | 64.1 | 0.09 | 600 |
| Example 10 | 73.91 | 20.69 | 5.40 | 0.00 | 900 | Air | 2.37 | 0.24 | 66.0 | 0.11 | 600 |

Note 1): "*" represents Comparative Example.

[Table 1B]

| Table 1 Condition for producing ferrite powder (continued) | | | | | | | |
|---|---|---|---|---|---|---|---|
| | Thermal sprayinn | | | | | | |
| | Propane gas flow rate (m³/hr) | Total oxygen flow rate (m³/hr) | Raw material supply oxygen flow rate (m³/hr) | Combustion oxygen flow rate (m³/hr) | Raw material supply amount (kg/hr) | Air volume | Thermal spraying temperature (°C) |
| Example 1 | 7 | 38 | 4 | 34 | 7 | 1000 | 2000 ≤ |
| Example 2* | 7 | 38 | 3 | 35 | 6 | 900 | 2000 ≤ |
| Example 3* | 7 | 38 | 3.5 | 34.5 | 5 | 900 | 2000 ≤ |
| Example 4* | 7 | 38 | 5 | 33 | 6.75 | 900 | 2000 ≤ |
| Example 5* | 7 | 38 | 4 | 34 | 5.5 | 1100 | 2000 ≤ |
| Example 6* | 7 | 38 | 4 | 34 | 7 | 1000 | 2000 ≤ |
| Example 7 | 7 | 38 | 4 | 34 | 7 | 1000 | 2000 ≤ |
| Example 8 | 7 | 38 | 4 | 34 | 7 | 1000 | 2000 ≤ |
| Example 9 | 7 | 35 | 2 | 33 | 8.5 | 700 | 2000 ≤ |
| Example 10 | 7.3 | 38 | 6 | 34 | 7 | 1000 | 2000 ≤ |
| Note 1): "*" represents Comparative Example. | | | | | | | |

(2) Evaluation

Various properties of the ferrite powders prepared in Examples 1 to 10 were evaluated as follows.

<Chemical Analysis>

The ferrite powder was subjected to chemical analysis to determine the content of the metal component. First, 0.2 g of the ferrite powder was weighed, and 60 ml of pure water, 20 ml of 1 N hydrochloric acid, and 20 ml of 1 N nitric acid were added thereto, followed by heating to prepare an aqueous solution in which the sample was completely dissolved. The obtained aqueous solution was set in an ICP analyzer (ICPS-10001V manufactured by Shimadzu Corporation), and the content of the metal component was measured.

<Oxidation-reduction Titration>

The amount of divalent iron ($Fe^{2+}$) contained in the ferrite powder was determined by oxidation-reduction titration. The oxidation-reduction titration was performed in accordance with JIS M 8213, and potassium permanganate was used instead of potassium dichromate.

<XRD>

The ferrite powder was analyzed by using an X-ray diffraction (XRD) method. The analysis was performed under the following conditions.

- X-ray diffraction device: X'pertMPD (including a high-speed detector) manufactured by PANalytical
- Radiation source: Co-K$\alpha$
- Tube voltage: 45 kV
- Tube current: 40 mA
- Scanning speed: 0.002°/s (continuous scanning)
- Scanning range (20): 15° to 90°

Based on the obtained X-ray diffraction profile, the content ratio of each of the spinel phase, the ZnO phase, and

the $\alpha$-Fe$_2$O$_3$ phase contained in the ferrite powder was determined. In addition, the X-ray diffraction profile was subjected to Rietveld analysis to estimate a lattice constant of the spinel phase, and the crystallite diameter of the spinel phase was determined according to the Scherrer's formula.

Further, the lattice vacancy ratio, a Fe excess ratio, and the like of the spinel phase were calculated using the amounts (unit: mass%) of Fe, Mn, Zn, and Cu obtained by the chemical analysis, the amount (unit: mass%) of divalent iron (Fe$^{2+}$) obtained by the oxidation-reduction titration, and the amount (unit: mass%) of $\alpha$-Fe$_2$O$_3$ obtained by the XRD analysis. Specifically, the calculation was performed according to the above equations (1) to (10).

<Particle Shape and Surface Structure>

The shape and the surface structure of the particles in the ferrite powder were evaluated as follows. First, the ferrite powder was observed using a scanning electron microscope (SEM, SU-8020 manufactured by Hitachi High-Tech Corporation). In the observation, the magnification was set to 50,000 times. Then, an image was taken in a state where 1 to 30, preferably 1 to 10 particles, were included in the field of view. In the imaging, 10 fields of view were randomly imaged to check the presence or absence of a polygonal step structure.

<Shape Factor>

The shape factors (SF-1 and SF-2) of the ferrite powder were determined using a particle image analyzer (Morphologi G3 manufactured by Malvern Panalytical). First, the ferrite powder was subjected to analysis using a particle image analyzer. During the analysis, image analysis was performed for each particle for 30,000 particles in the powder, and a circularity, a perimeter, and a CE diameter were automatically measured. At this time, an objective lens with a magnification of 10 times was used, and the particles were dispersed on a slide glass under the conditions of a sample amount of 3 mm$^3$ and a dispersion pressure of 5 bar using a dispersing jig attached to the particle image analyzer.

Among the obtained data, the average of the data of the particles having a volume average particle diameter within $\pm$5% was obtained as an average circularity, an average perimeter, and an average CE diameter, and SF-1 and SF-2 were calculated according to the following equations (18) and (19).

[Math. 9]

$$SF-1 = (\text{Average circularity})^{-1} \times 100 \quad \cdots \quad (18)$$

[Math. 10]

$$SF-2 = \frac{\text{Average perimeter}}{\pi \times \text{average CE diameter}} \times 100 \quad \cdots \quad (19)$$

<Tap Density>

The tap density of the ferrite powder was measured in accordance with JIS Z 2512-2012 using a USP tap density measuring device (POWDER TESTER PT-X, manufactured by Hosokawa Micron Group).

<True Specific Gravity>

The true specific gravity of the ferrite powder was measured in accordance with JIS Z8807:2012 using a gas replacement method. Specifically, the measurement was performed using a fully automatic true density measuring device (Macpycno, manufactured by MOUNTECH Co., Ltd.).

<BET Specific Surface Area>

The BET specific surface area of the ferrite powder was measured using a specific surface area measuring device (Macsorb HM model-1208, manufactured by MOUNTECH Co., Ltd.). First, about 10 g of the ferrite powder was placed on medicine packaging paper and degassed with a vacuum dryer. After confirming that a degree of vacuum was 0.1 MPa or less, the ferrite powder was heated at 200°C for 2 hours to remove moisture adhering to the surface of the particles.

Thereafter, the ferrite powder from which moisture had been removed (about 0.5 g to 4 g) was charged into a standard sample cell dedicated to the measuring device and accurately weighed with a precision balance. Subsequently, the weighed ferrite powder was set in a measurement port of the measuring device, and the measurement was performed by using a one-point method. The measurement atmosphere was a temperature of 10°C to 30°C and a relative humidity of 20% to 80% (no condensation).

<Particle Size Distribution>

The particle size distribution of the ferrite powder was measured as follows. First, 10 g of the ferrite powder and 80 ml of water were charged into a 100 ml beaker, and two drops of sodium hexametaphosphate were added as a dispersant. Next, the mixture was dispersed using an ultrasonic homogenizer (model UH-150, manufactured by SMT Co., Ltd.). In this case, an output level of the ultrasonic homogenizer was set to 4, and the dispersion was performed for 20 seconds. Thereafter, bubbles generated on a surface of the beaker were removed, and the obtained dispersion liquid was introduced into a laser diffraction type particle diameter distribution measuring device (SALD-7500nano, manufactured by Shimadzu Corporation) to perform the measurement. Measurement conditions were set to a pump speed of 7, an internal ultrasonic irradiation time of 30, and a refractive index of 1.70-050i. In a volume particle size distribution obtained by this measurement, a 10% diameter (D10), a 50% diameter (D50, volume average particle diameter), and a 90% diameter (D90) were determined.

<Magnetic Properties: Saturation Magnetization, Residual Magnetization, and Coercive Force>

The magnetic properties (saturation magnetization, residual magnetization, and coercive force) of the ferrite powder were measured as follows. First, the ferrite powder was packed in a cell having an inner diameter of 5 mm and a height of 2 mm, and set in a sample vibrating type magnetic measuring device (VSM-C7-10A, manufactured by TOEI INDUSTRY CO., LTD.). An applied magnetic field was applied and swept to 5 kOe, and then the applied magnetic field was reduced to draw a hysteresis curve. The saturation magnetization $\sigma s$, the residual magnetization $\sigma r$, and the coercive force Hc of the ferrite powder were determined based on the data of this curve.

<Magnetic Permeability>

The magnetic permeability of the ferrite powder was measured using an RF impedance/material analyzer (E4991B manufactured by Agilent Technologies) and a magnetic material measurement electrode (16454A). First, 9 g of the ferrite powder and 1 g of a binder resin (Kynar301F: polyvinylidene fluoride) were charged into a polyethylene container (inner capacity: 100 ml), and stirred and mixed using a ball mill under the condition of a rotation speed of 100 rpm. Next, a die (inner diameter: 4.5 mm, outer diameter: 13 mm) was filled with the obtained mixture (about 0.6 g), and the mixture was pressurized at a pressure of 40 MPa for 1 minute using a press machine to prepare a molded body. The obtained molded body was heated and cured at 180°C for 1 hour using a hot air dryer to obtain a measurement sample. The obtained measurement sample was set in the RF impedance/material analyzer, and the outer diameter, the inner diameter, and the height of the measurement sample measured in advance were input. During the measurement, the amplitude was set to 100 mV, and the measurement frequency range was swept from 1 MHz to 3 GHz on a logarithmic scale. Then, the real part ($\mu$') and the imaginary part ($\mu$") of the complex magnetic permeability at a frequency of 50 MHz were determined.

In addition, the loss factor (tan $\delta$) and the $\mu$'Q product were calculated according to the above equations (11) and (12) using the real part ($\mu$') and the imaginary part ($\mu$") of the complex magnetic permeability after 72 hours at 50 MHz.

Further, the temporal change of the magnetic permeability real part ($\mu$') at 50 MHz was measured until an elapsed time of 17520 hours. Then, using the obtained data, the magnetic permeability change rate was determined according to the above equations (13) and (14).

(3) Evaluation Results

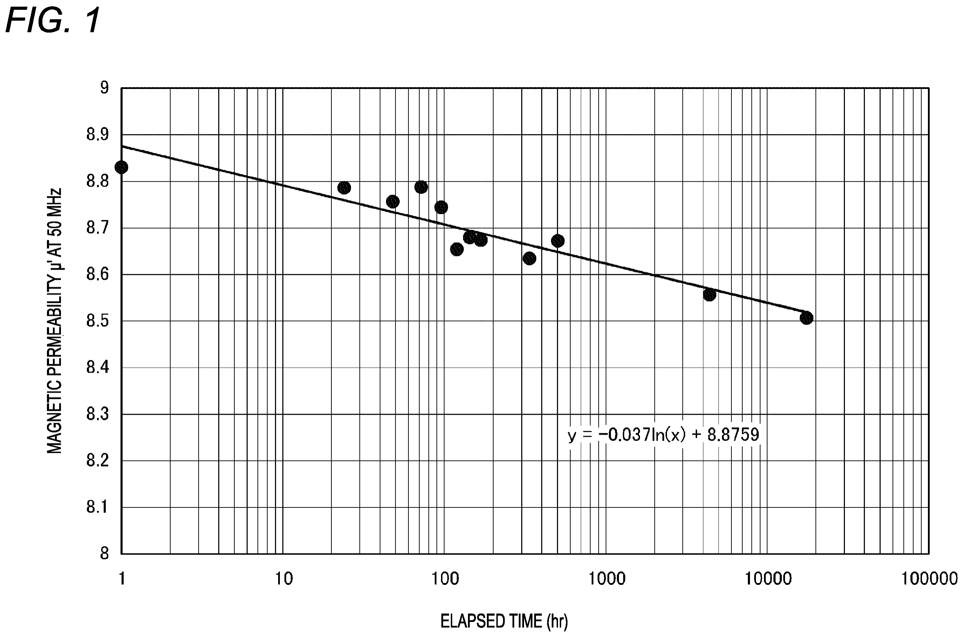

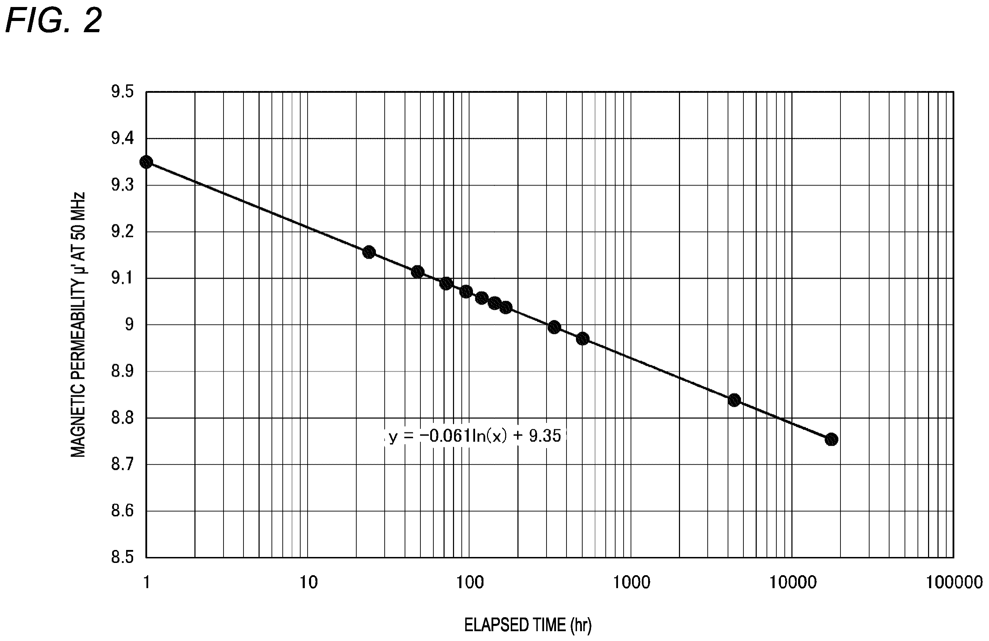

The evaluation results obtained for the ferrite powders in Examples 1 to 10 are shown in Tables 2 to 6 below. FIG. 1 (Example 1) and FIG. 2 (Example 5) show the temporal changes of the magnetic permeability real part ($\mu$') of the ferrite powders in Examples 1 and 5.

In the ferrite powders in Examples 2 and 3 as Comparative Examples, the amount of Fe is as small as 54.53 mass% or less, and the amount of Zn is as large as 3.64 mass% or more (Table 2). Therefore, the loss factor (tan $\delta$) at 50 MHz is as large as 0.028 or more, and the $\mu$'Q product is as small as 330 or less (Table 5). It is found that these ferrite powders have a large loss and are unsuitable for use in high frequency applications such as an inductor.

In the ferrite powder in Example 4 as Comparative Example, the amount of Fe is as large as 63.11 mass%, and the amount of Zn is zero (0) (Table 2). Therefore, the magnetic permeability real part ($\mu$') is as low as 6.45 (Table 5). It is found that this ferrite powder has a low magnetic permeability and is unsuitable for use in applications such as an inductor.

In the ferrite powder in Example 5 as Comparative Example, the amount of Zn is as large as 3.30 mass% (Table 2). Therefore, the loss factor (tan $\delta$) is as large as 0.024, and the $\mu$'Q product is as small as 379 (Table 5). In addition, the lattice vacancy ratio is as large as 100.0%, and the magnetic permeability change rate is as large as 0.061 (Tables 3 and 6). It is found that this ferrite powder has a large loss and is poor in temporal stability of the magnetic permeability.

The ferrite powder in Example 6 as Comparative Example contains aggregates (Table 4). Therefore, the shape factors SF-1 and SF-2 are as large as 126 to 130, and the volume average particle diameter (D 50) is as large as 23.11 $\mu$m (Table 4). In addition, no step structure is observed on the surface of the particles (Table 4). This ferrite powder has a loss factor (tan $\delta$) as large as 0.084 and a $\mu$'Q product as small as 107 (Table 5). In addition, the magnetic permeability change rate is as large as 0.081 (Table 6). It is found that this ferrite powder has a large loss and is poor in temporal stability of the magnetic permeability. In addition, it is thought that the ferrite powder has a poor filling property when formed into a composite material (composite body).

In contrast, the ferrite powders in Example 1 and Examples 7 to 10 as Examples have a true spherical shape (Table 4). Therefore, SF-1 and SF-2 are as small as 101 to 102, the surface has a polygonal step structure, and D50 is as relatively small as 9.92 $\mu$m or less (Table 4). In addition, the lattice vacancy ratio is 80.5 mol% or less (Table 3). These ferrite powders have a magnetic permeability real part ($\mu$') of 8.23 or more and a $\mu$'Q product of 439 or more (Table 5). In addition, the magnetic permeability change rate is as small as 0.038 or less, and particularly the ferrite powder in Example 9 has a very small magnetic permeability change rate of 0.005 (Table 6). Therefore, it is found that these ferrite powders have a high magnetic permeability, a low loss, and a small temporal change of the magnetic permeability.

From the above results, it is understood that according to the present embodiment, it is possible to obtain a ferrite powder having excellent temporal stability of a magnetic permeability while maintaining a high filling property, and a high magnetic permeability and a low loss at a high frequency.

[Table 2]

| Table 2 Properties of ferrite powder | | | | | | | | | | |
|---|---|---|---|---|---|---|---|---|---|---|
| | Chemical analysis (ICP) | | | | | Amount of Fe$^{2+}$ (mass%) using titration method | XRD | | | |
| | Fe (mass%) | Mn (mass%) | Zn (mass%) | Cu (mass%) | Fe/Mn mass ratio | | Spinel phase (mass%) | ZnO (mass%) | $\alpha$-Fe$_2$O$_3$ (mass%) | Crystallite diameter (nm) |
| Example 1 | 59.80 | 9.67 | 2.61 | 0.00 | 6.18 | 3.1 | 99.3 | 0.0 | 0.7 | 188 |
| Example 2* | 54.53 | 10.98 | 3.64 | 0.11 | 4.97 | 2.6 | 98.8 | 0.0 | 1.2 | 181 |
| Example 3* | 51.40 | 16.02 | 4.12 | 0.05 | 3.21 | 1.6 | 98.7 | 0.0 | 1.3 | 183 |
| Example 4* | 63.11 | 7.41 | 0.00 | 0.00 | 8.52 | 3.3 | 94.9 | 0.0 | 5.1 | 227 |
| Example 5* | 56.00 | 12.70 | 3.30 | 0.00 | 4.41 | 0.0 | 97.9 | 0.1 | 2.0 | 183 |
| Example 6* | 58.40 | 10.97 | 3.18 | 0.00 | 5.46 | 4.8 | 95.5 | 0.2 | 4.3 | 191 |
| Example 7 | 59.40 | 9.67 | 2.78 | 0.24 | 6.14 | 3.4 | 97.6 | 0.0 | 2.4 | 190 |
| Example 8 | 59.70 | 9.78 | 2.60 | 0.11 | 6.10 | 5.1 | 98.3 | 0.0 | 1.7 | 190 |
| Example 9 | 60.20 | 9.55 | 2.37 | 0.49 | 6.30 | 6.5 | 99.0 | 0.0 | 1.0 | 190 |
| Example 10 | 61.60 | 8.00 | 2.41 | 0.00 | 7.70 | 3.7 | 99.2 | 0.0 | 0.8 | 173 |
| Note 1): "*" represents Comparative Example. | | | | | | | | | | |

[Table 3]

| Table 3 Component composition and empty lattice ratio of ferrite powder | | | | | | | | | | |
|---|---|---|---|---|---|---|---|---|---|---|
| | Amount of Fe: A (mol) | Amount of Mn: B (mol) | Amount of Zn: C (mol) | Amount of Fe2+: D (mol) | Amount of α-Fe$_2$O$_3$: E (mol) | Amount of Cu: F (mol) | Excess amount of Fe: G (mol) | Amount of γ-Fe$_2$O$_3$: H (mol) | Empty lattice ratio: I (mol%) | Excess Fe ratio: J (mol%) |
| Example 1 | 1.071 | 0.176 | 0.040 | 0.056 | 0.004 | 0.000 | 0.630 | 0.231 | 80.5 | 58.85 |
| Example 2* | 0.976 | 0.200 | 0.056 | 0.047 | 0.008 | 0.002 | 0.442 | 0.150 | 76.2 | 45.22 |
| Example 3* | 0.920 | 0.292 | 0.063 | 0.029 | 0.008 | 0.001 | 0.191 | 0.052 | 64.7 | 20.74 |
| Example 4* | 1.130 | 0.135 | 0.000 | 0.060 | 0.032 | 0.000 | 0.796 | 0.308 | 83.8 | 70.48 |
| Example 5* | 1.003 | 0.231 | 0.050 | 0.000 | 0.013 | 0.000 | 0.414 | 0.207 | 100.0 | 41.33 |
| Example 6* | 1.046 | 0.200 | 0.049 | 0.085 | 0.027 | 0.000 | 0.495 | 0.133 | 58.5 | 47.36 |
| Example 7 | 1.064 | 0.176 | 0.043 | 0.061 | 0.015 | 0.004 | 0.578 | 0.197 | 76.3 | 54.31 |
| Example 8 | 1.069 | 0.178 | 0.040 | 0.092 | 0.011 | 0.002 | 0.603 | 0.164 | 64.2 | 56.45 |
| Example 9 | 1.078 | 0.174 | 0.036 | 0.116 | 0.006 | 0.008 | 0.607 | 0.129 | 52.6 | 56.28 |
| Example 10 | 1.103 | 0.146 | 0.037 | 0.067 | 0.005 | 0.000 | 0.728 | 0.264 | 79.7 | 66.00 |
| Note 1): "*" represents Comparative Example. | | | | | | | | | | |

[Table 4]

| Table 4 Properties of ferrite powder | | | | | | | | | | |
|---|---|---|---|---|---|---|---|---|---|---|
| | Particle shape of obtained particles | | | Surface structure of particles | Properties of powder | | | Particle size distribution | | |
| | Shape | SF-1 | SF-2 | Step shape | Tap density (g/cm$^3$) | True specific gravity (g/cm$^3$) | **BET** (m$^2$/g) | D10 (μm) | D50 (μm) | D90 (μm) |
| Example 1 | True spherical shape | 101 | 101 | Polygon | 2.78 | 5.10 | 0.65 | 1.60 | 3.16 | 7.11 |
| Example 2* | True spherical shape | 102 | 101 | Polygon | 2.83 | 5.16 | 0.62 | 1.82 | 3.43 | 6.86 |
| Example 3* | True spherical shape | 102 | 101 | Polygon | 2.85 | 5.25 | 0.78 | 1.55 | 2.80 | 6.33 |
| Example 4* | True spherical shape | 104 | 102 | Polygon | 2.86 | 4.99 | 0.66 | 1.91 | 3.83 | 8.34 |

(continued)

| Table 4 Properties of ferrite powder | | | | | | | | | | |
|---|---|---|---|---|---|---|---|---|---|---|
| | Particle shape of obtained particles | | | Surface structure of particles | Properties of powder | | | Particle size distribution | | |
| | Shape | SF-1 | SF-2 | Step shape | Tap density (g/cm$^3$) | True specific gravity (g/cm$^3$) | **BET** (m$^2$/g) | D10 ($\mu$m) | D50 ($\mu$m) | D90 ($\mu$m) |
| Example 5* | True spherical shape | 101 | 101 | Polygon | 2.77 | 5.19 | 0.57 | 1.73 | 3.53 | 8.52 |
| Example 6* | True spherical shape + aggregate | 126 | 130 | No | 3.15 | 5.10 | 0.14 | 6.82 | 23.11 | 43.28 |
| Example 7 | True spherical shape | 102 | 101 | Polygon | 2.96 | 5.10 | 0.70 | 1.73 | 3.57 | 8.84 |
| Example 8 | True spherical shape | 101 | 101 | Polygon | 2.96 | 5.10 | 0.71 | 1.15 | 3.81 | 8.67 |
| Example 9 | True spherical shape | 101 | 101 | Polygon | 3.06 | 5.10 | 0.39 | 2.55 | 9.92 | 23.13 |
| Example 10 | True spherical shape | 101 | 101 | Polygon | 2.76 | 5.08 | 0.57 | 1.84 | 3.48 | 8.22 |
| Note 1): "*" represents Comparative Example. | | | | | | | | | | |

[Table 5]

| Table 5 Properties of ferrite powder | | | | | | |
|---|---|---|---|---|---|---|
| | Magnetic properties (VSM at 5 kOe) | | | Magnetic permeability (at 50 MHz, 72 hrs) | | |
| | (Am$^2$/kg) | $\sigma$r (Am$^2$/kg) | Hc (Oe) | $\mu$' | tan $\delta$ | $\mu$'Q product |
| Example 1 | 85.9 | 2.2 | 31.9 | 8.79 | 0.007 | 1205 |
| Example 2* | 86.2 | 2.1 | 31.1 | 9.24 | 0.028 | 330 |
| Example 3* | 78.6 | 2.0 | 29.2 | 9.79 | 0.041 | 238 |
| Example 4* | 86.2 | 2.9 | 41.6 | 6.45 | 0.006 | 1080 |
| Example 5* | 86.0 | 2.1 | 30.1 | 9.09 | 0.024 | 379 |
| Example 6* | 75.4 | 4.5 | 45.2 | 8.96 | 0.084 | 107 |
| Example 7 | 84.4 | 2.3 | 33.0 | 8.57 | 0.013 | 681 |
| Example 8 | 86.9 | 2.1 | 31.4 | 8.52 | 0.017 | 501 |
| Example 9 | 86.2 | 2.1 | 30.2 | 9.22 | 0.021 | 439 |
| Example 10 | 86.8 | 2.4 | 34.5 | 8.23 | 0.012 | 677 |
| Note 1): "*" represents Comparative Example. | | | | | | |

[Table 6]

| Table 6 Temporal change of magnetic permeability | | | | | | | | | | | | | | | |
| --- | --- | --- | --- | --- | --- | --- | --- | --- | --- | --- | --- | --- | --- | --- | --- |
| | Magnetic permeability $\mu'$ (at 50 MHz) | | | | | | | | | | | | Approximate straight line | | Magnetic permeability change rate |
| | 1 hr | 24 hr | 48 hr | 72 hr | 96 hr | 120 hr | 144 hr | 168 hr | 336 hr | 504 hr | 4392 hr | 17520 hr | Slope A | Intercept B | |
| Example 1 | 8.83 | 8.79 | 8.76 | 8.79 | 8.74 | 8.65 | 8.68 | 8.67 | 8.63 | 8.67 | 8.56 | 8.51 | -0.037 | 8.88 | 0.037 |
| Example 2* | 9.38 | 9.31 | 9.29 | 9.24 | 9.23 | 9.22 | 9.26 | 9.27 | 9.19 | 9.18 | 9.12 | 9.08 | -0.031 | 9.39 | 0.031 |
| Example 3* | 9.80 | 9.80 | 9.79 | 9.79 | 9.79 | 9.79 | 9.79 | 9.79 | 9.79 | 9.79 | 9.78 | 9.78 | -0.002 | 9.80 | 0.002 |
| Example 4* | 6.65 | 6.50 | 6.47 | 6.45 | 6.44 | 6.43 | 6.42 | 6.41 | 6.38 | 6.36 | 6.26 | 6.20 | -0.046 | 6.65 | 0.046 |
| Example 5* | 9.35 | 9.16 | 9.11 | 9.09 | 9.07 | 9.06 | 9.05 | 9.04 | 9.00 | 8.97 | 8.84 | 8.75 | -0.061 | 9.35 | 0.061 |
| Example 6* | 9.31 | 9.05 | 9.00 | 8.96 | 8.94 | 8.92 | 8.91 | 8.89 | 8.84 | 8.81 | 8.63 | 8.52 | -0.081 | 9.31 | 0.081 |
| Example 7 | 8.75 | 8.75 | 8.61 | 8.57 | 8.58 | 8.57 | 8.56 | 8.56 | 8.53 | 8.52 | 8.43 | 8.38 | -0.038 | 8.75 | 0.038 |
| Example 8 | 8.57 | 8.59 | 8.49 | 8.52 | 8.48 | 8.47 | 8.47 | 8.47 | 8.45 | 8.44 | 8.40 | 8.37 | -0.021 | 8.57 | 0.021 |
| Example 9 | 9.24 | 9.24 | 9.22 | 9.22 | 9.22 | 9.22 | 9.22 | 9.22 | 9.21 | 9.21 | 9.20 | 9.20 | -0.005 | 9.24 | 0.005 |
| Example 10 | 8.39 | 8.39 | 8.24 | 8.23 | 8.22 | 8.21 | 8.20 | 8.20 | 8.17 | 8.15 | 8.07 | 8.07 | -0.037 | 8.39 | 0.037 |
| Note 1): "*" represents Comparative Example. | | | | | | | | | | | | | | | |

**Claims**

1. A ferrite powder comprising:

   56.0 mass% or more and 63.0 mass% or less of iron (Fe);
   7.0 mass% or more and 13.0 mass% or less of manganese (Mn); and
   1.0 mass% or more and 3.0 mass% or less of zinc (Zn).

2. The ferrite powder according to claim 1, wherein

   the ferrite powder contains spheroidal ferrite particles containing a spinel phase as a main component,
   the spinel phase has an amount of iron (Fe) being excessive than a stoichiometric ratio and a lattice vacancy ratio of 0 mol% or more and 90 mol% or less, and
   the ferrite powder has a shape factor SF-1 of 100 or more and 110 or less and a volume average particle diameter (D50) of 2.0 $\mu$m or more and 20 $\mu$m or less.

3. The ferrite powder according to claim 1 or 2, wherein a content of $\alpha$-iron oxide ($\alpha$-$Fe_2O_3$) is 0.0 mass% or more and 3.0 mass% or less.

4. The ferrite powder according to claim 1 or 2, wherein a content of copper (Cu) is 0.0 mass% or more and 0.5 mass% or less.

# FIG. 1

ELAPSED TIME (hr)

MAGNETIC PERMEABILITY μ' AT 50 MHz

$y = -0.037\ln(x) + 8.8759$

FIG. 2

EP 4 691 993 A1

## INTERNATIONAL SEARCH REPORT

| International application No. |
|---|
| **PCT/JP2024/012842** |

### A. CLASSIFICATION OF SUBJECT MATTER

***C01G 49/00***(2006.01)i; ***C04B 35/38***(2006.01)i; ***H01F 1/34***(2006.01)i
FI:  C01G49/00 B; C04B35/38; H01F1/34 140

According to International Patent Classification (IPC) or to both national classification and IPC

### B. FIELDS SEARCHED

Minimum documentation searched (classification system followed by classification symbols)

C01G49/00; C04B35/38; H01F1/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/159799 A1 (POWDERTECH CO., LTD.) 22 August 2019 (2019-08-22)<br>entire text, all drawings | 1-4 |
| A | JP 2021-066648 A (POWDERTECH CO., LTD.) 30 April 2021 (2021-04-30)<br>entire text | 1-4 |
| A | JP 06-290926 A (NIPPON STEEL CORP.) 18 October 1994 (1994-10-18)<br>entire text | 1-4 |
| A | CN 113200741 A (HUBEI WEISHUO NEW MATERIAL CO., LTD.) 03 August 2021<br>(2021-08-03)<br>entire text | 1-4 |

☐ Further documents are listed in the continuation of Box C.   ☑ See patent family annex.

| | Special categories of cited documents: | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012842**

| Patent document cited in search report | | | Publication date (day/month/year) | Patent family member(s) | | | Publication date (day/month/year) |
|---|---|---|---|---|---|---|---|
| WO | 2019/159799 | A1 | 22 August 2019 | TW | 201935491 | A | |
| JP | 2021-066648 | A | 30 April 2021 | (Family: none) | | | |
| JP | 06-290926 | A | 18 October 1994 | (Family: none) | | | |
| CN | 113200741 | A | 03 August 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2022209640 A